# EUROPEAN PATENT SPECIFICATION

(11) **EP 1 415 236 B1**
(45) Date of publication and mention of the grant of the patent: **18.04.2018**
(21) Application number: 02765841.8
(22) Date of filing: 15.07.2002
(51) Int. Cl.: G06F 15/16, G06F 15/173, H04L 29/06, H04L 29/08, H04L 29/14

(54) **METHOD AND APPARATUS FOR SESSION REPLICATION AND FAILOVER**
VERFAHREN UND VORRICHTUNG FÜR SITZUNGSREPLIKATION UND FAILOVER
PROCEDE ET DISPOSITIF DE REPLICATION ET DE REPRISE DE SESSION

(30) Priority: 16.07.2001 US 305992 P; 16.07.2001 US 305969 P; 31.10.2001 US 708; 31.10.2001 US 709
(43) Date of publication of application: 06.05.2004
(73) Proprietor: Oracle International Corporation, Redwood Shores, CA 94065 (US)
(72) Inventor: HALPERN, Eric, M., San Francisco, CA 94117 (US); PEDDADA, Prasad, Albany, CA 94706 (US); MESSINGER, Adam, San Francisco, CA 94131 (US); JACOBS, Dean, Bernard, Berkeley, CA 94707 (US); PULLARA, Sam, San Francisco, CA 94107 (US)
(74) Representative: D Young & Co LLP
(86) International application number: PCT/US2002/022429
(87) International publication number: WO 2003/009157

(56) References cited:
- WO-A-00/45303
- WO-A-01/44894
- US-A- 5 828 847
- US-A- 5 933 606
- US-A- 5 951 694
- US-A- 6 134 673
- US-B1- 6 195 680
- US-B1- 6 199 110
- US-B1- 6 301 589

## Description

### CLAIM OF PRIORITY

This application claims priority to U.S. Provisional patent application No. 60/305,992, filed July 16,2001, entitled METHOD AND APPARATUS FOR SERVLET SESSION REPLICATION AND FAILOVER; U.S. Patent application No.10/000,708, filed October31,2001, entitled METHOD AND APPARATUS FOR SESSION REPLICATION AND FAILOVER; Provisional patent application No. 60/305,969, filed July 16, 2001, entitled HARDWARE LOAD-BALANCING APPARATUS FOR SERVLET SESSION REPLICATION; United States Patent Applicaiton No. 10/000,709, filed October31, 2001 entitled HARDWARE LOAD-BALANCING APPARATUS FOR SESSION REPLICATION

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### FIELD OF THE INVENTION

The invention relates generally to data replication and specifically to providing redundancy for a client network session.

### BACKGROUND

When a client connects to a server on a network and begins a session, there can be information stored on the server that is particular to that client session. For example, a user of the client might place items in a virtual shopping cart. The selection of those items can be stored, at least temporarily, on the server. In this example, there is no need for other users or servers to have access to this information. It is desirable, however, that this data be highly available across a network or server cluster such that if the server storing the session data fails, it is possible to recover the data on another server.

One way to accomplish data recovery in such a situation is to store the information in a database during the session, although the information could also be stored by other means such as in a data file. Every time a change is made to the session data, an update is written to the database such that the data is accessible to every server having access to the database. The data is stored in a persistent place, and can easily be retrieved by another server.

A problem exists with this approach, however, in that it is fairly expensive to fetch session information from the database for each request. The multiple hits to the database can create a bottleneck and bog the system down to the point where it is basically inoperable, as the throughput of the system can depend on the number of database connections from the server. Also, these sessions may contain the type of information, to which users want quick access. With some applications, it is possible for there to be thousands of clients working simultaneously, resulting in thousands of concurrent sessions. Some servers are expected to host many different applications, which further increases the number of sessions that may need to be hosted.

It is desirable to improve the speed and efficiency of such a system so that these tens of thousands of users may use the system effectively. One way to avoid such a bottleneck is to assume that the servers will be up and running 99.9% of the time and simply neglect to backup any information. This may be the solution providing the fastest user experience, but even 0.1% downtime resulting in data loss is unacceptable to many users.

WO 01/44894 discloses a system for directing a request for dynamic content to an application server which has access to a database containing updated data relevant to the request. The system contains a dynamic content router, database replication agents and web server plug-ins. The dynamic content router directs the web server plug-ins to forward the request to the appropriate application server.

WO 00/45303 discloses a system that relates to managing multiple web servers, and more particularly to a web service system and method that allows a system operator to distribute content to each web server in the web service system. In one embodiment, a method for replicating changes in a source file set on a destination file system includes identifying changes in a source file set, storing the identified changes in a modification list, and transmitting the modification list to an agent having access to a destination file system.

US 6195680 discloses a client-based system for the fault tolerant delivery of real-time or continuous data streams, such as real-time multimedia streams, e.g., live audio and video clips. Multimedia servers are grouped into two or more sets, for example wherein a first set includes one or more primary servers using odd-numbered ports and a second set includes one or more secondary servers using even-numbered ports. The client requests a multimedia stream through a control server or gateway which routes requests to the multimedia servers; and the client receives the stream directly from a selected (primary) server. The client automatically detects load imbalances and/or failures (complete or partial) and dynamically switches to a secondary server in order to continue receiving the real-time multimedia stream with minimal disruption and while maintaining a balanced load across multiple servers in a distributed network environment.

### BRIEF SUMMARY

The invention is defined in the appended claims.

Systems described herein can utilize a primary server to serve requests from a network client such as a web browser. The primary server can be selected from a pool of servers or server cluster. Once a primary server is selected, a client request can be served on that primary. A secondary session server can then be chosen, such as by the primary server. Once the primary server responds to the request, the information relating to the session is sent from the primary server to the secondary session server. This can be a full set of information for a first request on a session, or can simply be an update to existing information in a session in response to subsequent requests. Information identifying the primary and secondary servers can be stored on the client, such as a "token" that is stored as a cookie or passed on top of standard RMI in a manner similar to a transaction or security context. This identification information or "token" can accompany each request.

A system can take advantage of load balancing using either hardware or software. In a process useful with software load balancing, a request may be received on a session for which a primary and secondary session server have already been selected. An attempt is made to serve the request on the primary server. If the primary is unable to receive or respond to the request, the request can be served on the secondary application server. If the secondary server receives the request, the secondary server becomes the new primary server. A new secondary server can be selected and sent the session information from the new primary server in order to maintain redundancy.

In a process useful with a hardware load balancer, a request is received on a session for which a primary and secondary session server have been selected. An attempt is then made to serve the request on the primary server. If the primary server is unable to receive or respond to the request, the hardware load balancer can select a new primary server and attempt to serve the request on the new primary server, instead of using the secondary session server. The session information can be sent from the secondary session server to the new primary server, such as in response to a request from the new primary. The new primary server can then respond to the request, and send updated session information to the secondary server, so that the servers are in sync with regard to that session.

### BRIEF DESCRIPTION OF THE DRAWINGS

FIGURE 1 is a diagram of an application server system in accordance with one embodiment of the present invention.
FIGURE 2 is a diagram of a multi-level architecture in accordance with one embodiment of the present invention.
FIGURE 3 is a diagram of a servlet engine system in accordance with one embodiment of the present invention.
FIGURE 4 is a diagram of a load balancer system in accordance with one embodiment of the present invention.
FIGURE 5 is a diagram of a Java system in accordance with one embodiment of the present invention.
FIGURE 6 is a flowchart for a process in accordance with one embodiment of the present invention.
FIGURE 7 is a flowchart for a software load balancer process in accordance with one embodiment of the present invention.
FIGURE 8 is a flowchart for a hardware load balancer process in accordance with one embodiment of the present invention.

### DETAILED DESCRIPTION

The present invention overcomes many of the deficiencies of prior art replication systems. In one system in accordance with an embodiment of the present invention, a session is created when a client makes a request to a server on a network, such as a local area network (LAN), ethernet, or Internet. The session server receiving the request can consist of any server that may be used to store information for a session and/or generate a response to a session request, such as for example an application server, a web server, an object server, or a servlet engine. The server ultimately receiving the request becomes the "primary" server, or the server to which the client will send future requests. The system can then choose a "secondary" server for that session, which acts as a source for redundancy.

Each time an update is made in that session, the change may not only be stored on the primary server, but can also be sent, such as by remote call, to the secondary server. The entire set of session data need not be forwarded to the secondary server each time a change is made, but only that data or information that has changed, such as can be sent in a delta or packet of information. Sending the minimum amount of necessary information in the delta can improve overall system efficiency. The replication acts like a mirroring system, except for the fact that it acts on session data. This mirroring can be done, in one example, for web applications using a servlet engine.

When a client connects to a server, a session object can be created that is associated with the client or user. The session object can be maintained on the primary server for the duration of the session or can be timed out after a specified period of time. Each session object can be given a unique identifier or identification numberto identify the client and/or object to the server. The server chosen to serve the request can act as the primary server for the duration of the session. The primary server can choose a secondary server for the session object, such that each time the object is updated the update is also stored on the secondary server. The secondary server can be optimized to receive only minimum information or to batch updates, in order to improve the efficiency of the system.

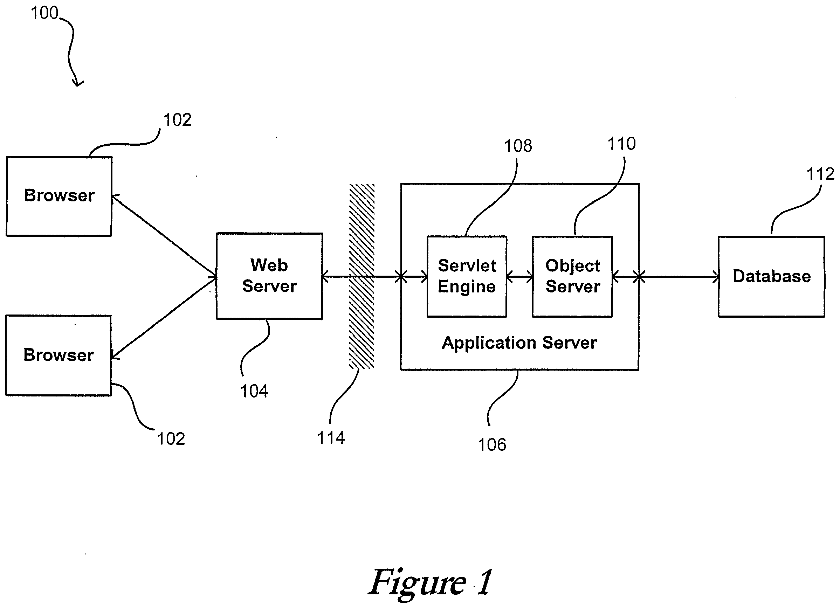

One web-based system **100** in accordance with an embodiment of the present invention is shown in **Figure 1****.** In this system, a browser **102,** or client, makes a request that is received by a web server **104.** The web server **104** acts as a proxy, in that the web server looks at the request and determines which of the object servers **110** should receive the request. The web server can have a plug-in, or plug-in API, that is aware of the request. A plug-in is generally an object that is added to an application in order to provide additional functionality without the need to launching any external applications. The plug-in can make a load-balancing decision in order to choose between the object servers **110** which are available to create and house the session for the client **102.** The web server **104** proxies back to the chosen object server **110,** which can be housed in an application server **106.** A servlet engine **108** in the application server **106** can execute servlets that invoke objects on the object server **110** in order to respond to the request. In order to fully respond to the request, the object server **110** may also need to pull information from a database **112** or data store. The object server **110** can create the session upon receiving the request. In order to provide security, the application server **106** and database can be located behind a firewall **114,** as is known and used in the art.

The object server in this example then chooses a secondary server for the session. In an alternative embodiment, the plug-in can be used to choose a secondary server. The plug-in can also use load balancing for the decision.

The object server passes the data to the secondary server, and lets the secondary server know it will be the backup. The object server then creates a cookie to be sent to, and stored by, the client. The cookie contains an identification of the primary and secondary servers used for the session.

When a subsequent request is sent by the client on the same session, it does not matter which web server receives the request. The web server will look at the cookie to determine the primary server for that session, and will then route the request to that primary server.

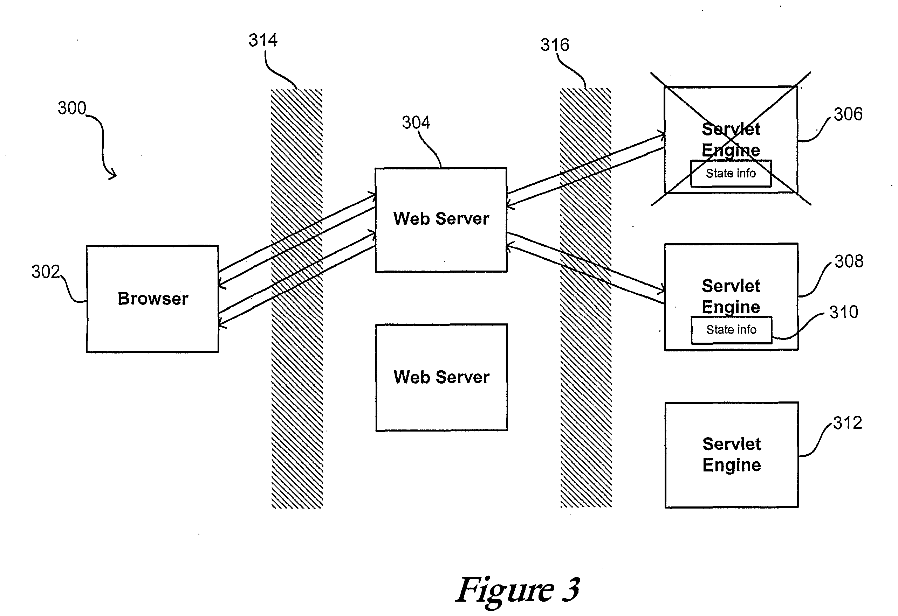

Assume an example, as shown in **Figure 3****,** with three servlet engines **306, 308,** and **312,** each being capable of acting as a primary server. If the session is current on primary server **306,** but primary server **306** fails, the web server **304** can determine which server was chosen as the secondary server by examining the cookie information sent with the request from the browser **302.** The web server can then try to route the request to secondary server **308,** which also contains the session state information **310.** The web server can return a response to the browser **302,** which will make another request that can be directed by the web server **304** to the secondary server **308.** If secondary server **308** receives the request, it can become the new primary server automatically, as secondary server **308** knows it only receives a request directly from the web server if the primary server **306** fails to accept the request. At this point, secondary server **308,** now the primary server **308,** can choose new secondary server **312.** Alternatively, the plug-in to the web server **304** can choose new secondary server **312.** One possible place for a communication breakdown is shown by a first virtual boundary **314,** which exists between the browser/client **302** and the web servers **304.** A second virtual boundary exists between the web servers **304** and the servlet engines **306, 308,** and **312.**

In some embodiments, the secondary server or web server actively monitors the primary server in order to determine the status of the primary server. This monitoring can be done by any appropriate manner, such as by continually or periodically "pinging" the primary server to determine whether it is connected to the network. If it is determined that the primary server is unable to accept requests, the secondary server can become the new primary server. A new secondary server can then be selected. One advantage of such a design is that the window of time in which a dual server failure could result in session state loss is narrowed. While some embodiments allow the window to be defined by the client request rate, this approach would allow the window to be defined by the rate of server pinging.

The new primary and secondary servers are similarly responsible for information pertaining to the session. The server that was previously the primary server may no longer have any responsibility or information for that session, even if that server becomes able to accept and process requests while the session is still current. The secondary server may automatically change its state, such that it becomes the new primary server for the session, but it may choose not to assign a new secondary server until the new primary server receives a request.

It may be undesirable to actively create a new secondary server or backup the session information on a secondary server, as it may not be known whether the new primary server will receive another request. Creating a new secondary server or backing up information that will not get used can unnecessarily waste resources. The session may alternatively be short lived, and may not "live" long enough to receive a subsequent request. Each session typically has a time-out value, such that if the session is inactive for a specified period of time it will "time-out" or "die", the session will be ended, and all data stored for the session may be deleted to conserve memory. In such a case, not only might the creation of a secondary server waste resources, but it may also require unnecessary "clean-up" work to remove the session information from the new secondary server.

The primary and/or secondary server can be chosen according to an algorithm, which may have as options, for example, any server in a specified server cluster. While it may be efficient for an algorithm to choose the primary and secondary server for each session, there are cases where the input of an administrator may be desirable. For instance, it may be possible that multiple servers are located on one machine. If an algorithm is choosing servers, such as an algorithm based on load, the algorithm may select two servers on the same machine. In the event of a machine failure, both servers may be unavailable and the session data may be unavailable and/or lost. An administrator, however, can choose to specify primary and secondary servers that are on different machines. This can provide for redundancy not only across servers, but across machines as well.

Alternatively, it may be possible to build a parameter in the algorithm itself that, when doing a load-balancing analysis, takes into account the machine on which a server is located. If the server with the lowest current load is on the same machine as the primary server, the algorithm can choose to go to the server with the lowest load that is on a different machine. This approach can be expanded to any level of separation, such as servers in different rooms, different buildings, or different cities.

In order to allow servers in a cluster to function independently, the servers can be loosely coupled. To achieve this loose coupling, each server in the cluster can be configured to detect the status of other cluster servers such that action can be taken when a server leaves the cluster, either voluntarily or involuntarily. In one embodiment, servers can rely on the underlying operating system to monitor the status of the cluster servers. Other embodiments can require the servers to do monitoring. Embodiments where cluster servers do not have to participate in cluster monitoring may be preferred, as the servers' resources are available to improve the overall throughput of the system.

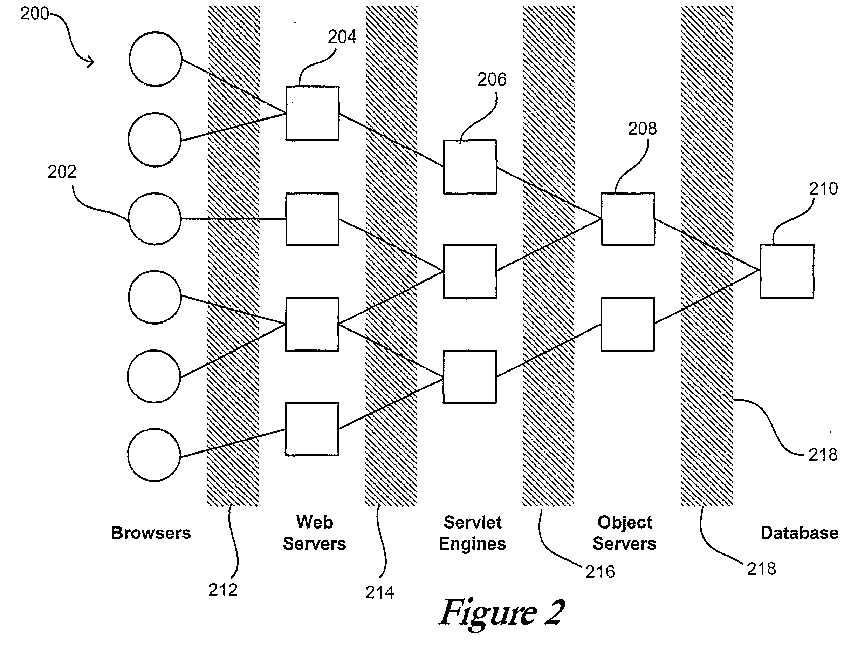

**Figure 2** shows a multi-tier cluster architecture **200** in accordance with the present invention. Each object in the system can be clustered by making instances of the object available on several servers. The architecture is shown to include virtual boundaries. The term "virtual boundary" refers to a place where a network connection may fail.

In **Figure 2****,** the first virtual boundary **212** is shown between the browsers **202** and the web servers **204.** A second barrier **214** is shown between the web servers **204** and the servlet engines **206.** A third barrier **216** is shown between the servlet engines **206** and the object servers **208.** Finally, a fourth barrier **218** is shown between the object servers **208** and the database **210.** Each barrier indicates a possible point for communication failure, that may also be able to take advantage of load balancing.

At the first virtual barrier, it is possible that a browser may not be able to get to a specific web server. This may not be a problem in a system in accordance with the present invention, however, because the information relating to the primary and secondary servers may already be stored in a cookie in the browser. The browser can contact any web server on the network, because the browser can indicate to the web server, through the cookie, which server should receive the request. While the system may be most efficient on a local area network (LAN), a similar approach can be used on any capable network. For instance, it may be possible for the browser to contact a second web server and/or backend servers over the Internet that might be located in separate buildings from the first web server.

Depending on the application, the primary and secondary servers can be of several different server types, such as web servers, servlet engines, or Enterprise Java bean ("ejb") engines. It may still be possible for each server in a cluster to be separate and specialized, such as being of different server types, but still be capable of acting as a primary and/or secondary server.

If clustering is enabled on a system in accordance with the present invention, it may be possible to transparently add new servers to the system to act as additional primary and secondary servers. Clustering is, generally, an approach to server management that allows management of a set of servers by establishing a "managing" server in that set of servers. This approach can simplify the deployment and synchronization of potentially diverse components among the servers in the cluster. Clustering can substantially improve system reliability and scalability.

When clustering with a system in accordance with the present invention, each server in a cluster can be configured to detect a new server entering the cluster and designate that new server as a secondary server to any existing primary server. The method used for load balancing may can immediately designate the new server as a primary or secondary server.

Systems in accordance with the present invention may alternatively utilize a hardware load balancer to direct incoming requests. In an Internet setting, for example, a hardware load balancer can sit on the network with an IP (Internet Protocol) address. Incoming requests from browsers or clients can be directed to that IP address. The hardware load balancer can then redirect those requests to other IP addresses, or other servers each assigned an IP address, located in the system but "behind" the hardware load balancer. In this way, it appears to the browser as if the request is always going to the same IP address, when in fact it may be going to multiple servers behind that IP address. The hardware load balancer can be aware of all servers located behind it in the network, such as may be the result of hardwiring the servers to the hardware load balancer, instead of utilizing another method such as software clustering.

There may be advantages to using a hardware load balancer. A hardware load balancer can utilize better algorithms for load balancing than other approaches. The hardware load balancer may be able to detect node failures, so that those nodes may be pulled out of the list of servers available to the algorithm. This node removal can prevent the algorithm from trying to go to servers that may not be reachable, even though those particular servers might not yet have been sent a request.

A system in accordance with the present invention can also use a Domain Name System (DNS) protocol, such as DNS Round Robin, instead of using a hardware load balancer to map a domain name to several IP addresses, or to redirect requests sent to a web server to several object servers. DNS, however, does not typically determine or detect whether those IP addresses are actually "live".

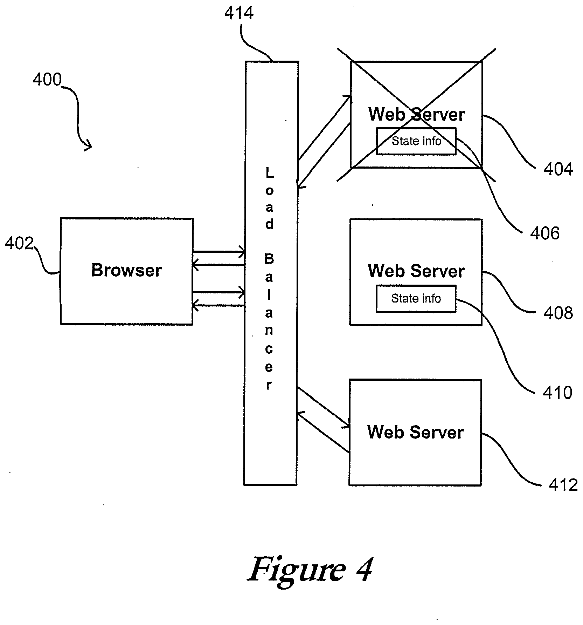

A hardware load balancer can be used to proxy certain types of requests to specific servers or server clusters, depending on whether the request requires dynamic page generation or whether the request is for a static page. In **Figure 4****,** a load balancer **414** is shown between the web browser **402** and the web servers **404, 408, 412.**

While it may be desirable to optimize a hardware load balancer **414** for use with the present invention, it may be undesirable to require physical changes to the load balancer itself. It may also be undesirable for a hardware load balancer to have to read cookies and figure out that if the first primary **404** fails, the request needs to be redirected to the secondary server **408** indicated in the cookie stored on the browser **402.** It may, however, be desirable to have the load balancer direct the request where the load balancer wants, and then make sure the system recovers appropriately.

In one such approach, the hardware load balancer **414** tends to send requests from a browser **402** or client to one server, based on some arbitrary information stored in the cookie on the web browser. For example, a cookie can have an initial string of information, followed by a segment of information related to the primary and secondary servers, as well as a session identifier used for replication. The hardware load balancer **414** can be configured to look only at this segment of information. If this segment of information does not change between successive cookies, the load balancer may keep redirecting the requests back to the primary server **404.** Such "session stickiness" can also be based on other appropriate schemes, such as may utilize the IP address of the client.

The segment of information in the cookie can remain the same as long as the requests can go back to the primary server. If the primary server fails for any reason, the second server can assign itself to be the new primary server. The new primary server can then insert new information in the segment for a new secondary server, which can be selected by the new primary server or load-balancing mechanism. Alternatively, the hardware load balancer can choose a new primary server and redirect the request to the new primary server.

The first request of a session that is received by the load balancer may not be hard coded to go to one server primarily. The decision to "stick" to one server can be made after the first request is made and comes back from the object server or other backend server. Hardware load balancers can be smart enough to do this "simple stickiness", or to return primarily to the assigned primary server with which the load balancer has a connection.

If no cookie exists, the hardware load balancer can be configured to use any of a number of load balancing methods, such as may be based on load or response time. The load balancer can then select a server, such as in the appropriate cluster, and direct the request to that server. When that primary server responds to the request, the server can send the browser a cookie containing the segment of information relating to the primary and secondary servers. Each subsequent request from that browser that is received by the hardware load balancer can have that cookie associated with it, such that the load balancer can associate that request with the primary server.

The system still may not be able to guarantee that a request will go to the primary server. As shown in **Figure 4****,** if a failure occurs at the primary server **404** and another request comes into the load balancer **414**, the load balancer can simply make another load balancing decision and direct the request to another server **412.** The request may not go to the second server **408.** This approach is different from that described above for a plug-in approach, where the request can automatically go to the second server. In this way, a hardware load balancer is less "intelligent" than a special proxy plug-in, similar to those described above.

If the server **412** chosen by the load balancer **414** is not the second server **408,** the chosen server **412** may realize that the request is a request on a session that it is not hosting. In this case, the chosen server **412** can look to the cookie in order to determine the secondary server **408.**

Once the chosen server **412** has located the secondary server **408,** the chosen server **412** can request session state information **410** from the secondary server **408.** The chosen server **412** can then transform itself into the new primary server for the session. The secondary server **408** in this case can remain the same. The cookie is updated so the load balancer **414** will keep directing the requests to the new primary server **412.**

In the event that the load balancer **414** chooses to direct the request to a new server that happens to be the secondary server **408,** the secondary server can set itself as the new primary server and a new secondary server can be selected.

A system with a hardware load balancer having a servlet cluster behind it can provide a fast data path. If a web server does the routing, it may be necessary for the request to come up into the software where some code is executed, and then be sent back out onto the network. The load balancer/servlet cluster system does everything at a low, protocol level so it may be comparatively very fast.

It may be advantageous to have the load balancing algorithms as localized as possible. In the hardware load balancer case, it may only be necessary to ensure that the software on the server is operating properly, such as software that may be written in Java. In systems without a hardware load balancer, it may be necessary to make sure that each special plug-in of every web server in the system works as well.

It may also be necessary to support plug-ins for different platforms. A hardware load balancer can work equally well with systems based on differing platforms, such as a Netscape Application Server (NAS), WebLogic Server™ (WLS), Microsoft® Internet Information Server (IIS), or Apache HTTP Server. With the hardware load balancer, the system can be reduced by one level of complexity, as one of the banks may be removed. This is shown in Figure 4, where the web server and servlet engine are in the same process.

Some of the systems described above can utilize servlets for web access. A similar mechanism can be used for accessing stateful session beans, a type of Enterprise Java bean ("ejb"). While servlets can be used to service requests from browser clients, ejb servers can be used to support requests from Java clients.

With Java clients, there can be a single, persistent connection for the entire duration of a session. There may then be no need (or support) for cookies. Also, since a persistent connection exists, there may no longer be a need for a load balancer. A Java client can connect to one of the backend servers using, for example, DNS or a load balancer. The Java client can then look up a "handle" to a stateful session. A handle in Java is similar to a pointer, which may be used to locate the appropriate session.

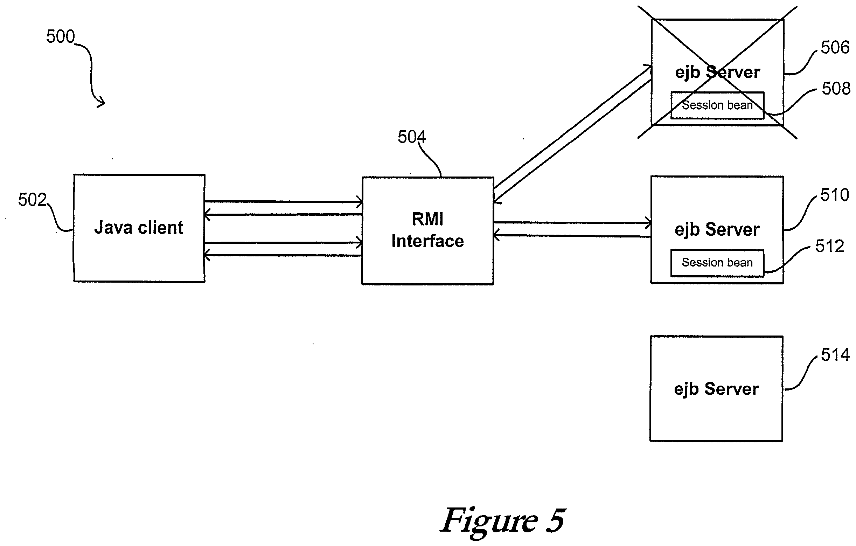

Referring to the system **500** of **Figure 5****,** once a Java client **502** is connected to a handle, the stateful session bean **510** can be created. The stateful session bean **510** can be used to handle the caching or storing of information for the session. When the stateful session bean is created, the server housing the bean can become the primary server **508,** to which the Java client **502** can make requests. The primary server **506** can then choose a secondary server **512.** The secondary server **510** can also have a stateful session bean **512** to cache or store the session information.

The stateful session bean **508** can pass this information back to the Java client **502,** similar to sending a cookie, using an RMI (Java Remote Method Invocation) protocol. Extra information can be placed "on top" of the standard RMI in order to make this cookie simulation work, similar to the way transaction context propagation works. The primary/secondary server identifier pair can be passed back to the Java client **502** with every response. Each time the Java client **502** makes a call, it can call through an interface **504** into special RMI code adapted to continue to make calls to the primary server **506** for that session. If the primary fails, the Java client **502** can look at the information regarding the location of the secondary server **510,** and can instead make a request to the secondary server. It may be preferable, for efficiency, if only the essential information regarding server identification is passed back on top of the RMI.

The Java client **502** may always know which server is the secondary server **510.** The Java client can have much of the same logic that a proxy might have, such as always knowing to go to the secondary server **510** if the primary server **506** is unavailable. The Java client can monitor server health in order to avoid sending requests to unavailable servers. In the event that the secondary server **510** becomes the new primary server, a new secondary server **514** can still be chosen. The logic for selecting a new primary and/or secondary server can be similar to that described above. The Java client can immediately update to the new primary/secondary servers.

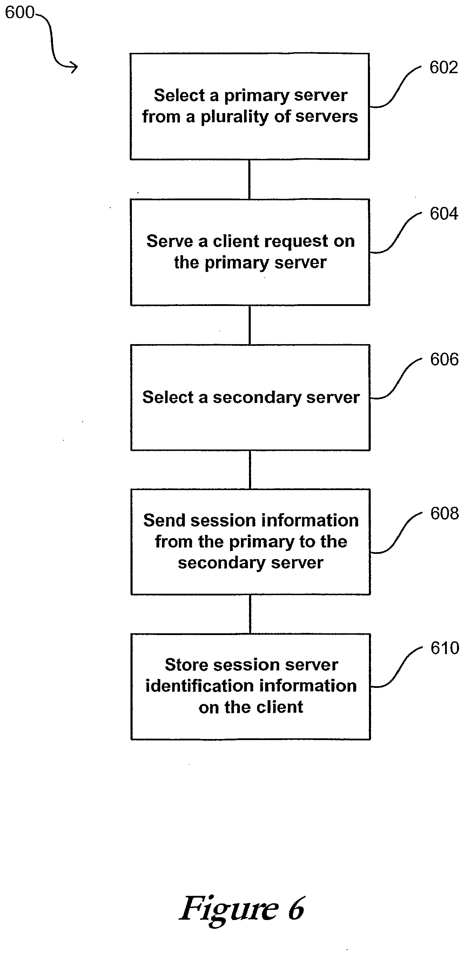

In accordance with the above discussion, systems in accordance with the present invention can generally follow one of two branching paths, although variations including those mentioned above may be utilized. A common part of such a path is shown in **Figure 6****.** In the process **600** of **Figure 6****,** a primary server is selected from a group of servers **602.** Once a primary server is selected, the client request is served on that primary server **604.** A secondary server is then chosen **606,** possibly by the primary server. The session information is then sent from the primary to the secondary server **608.** Information identifying the primary and secondary servers can be stored on the client **610,** such as may be stored in a cookie or passed on top of standard (or other) RMI.

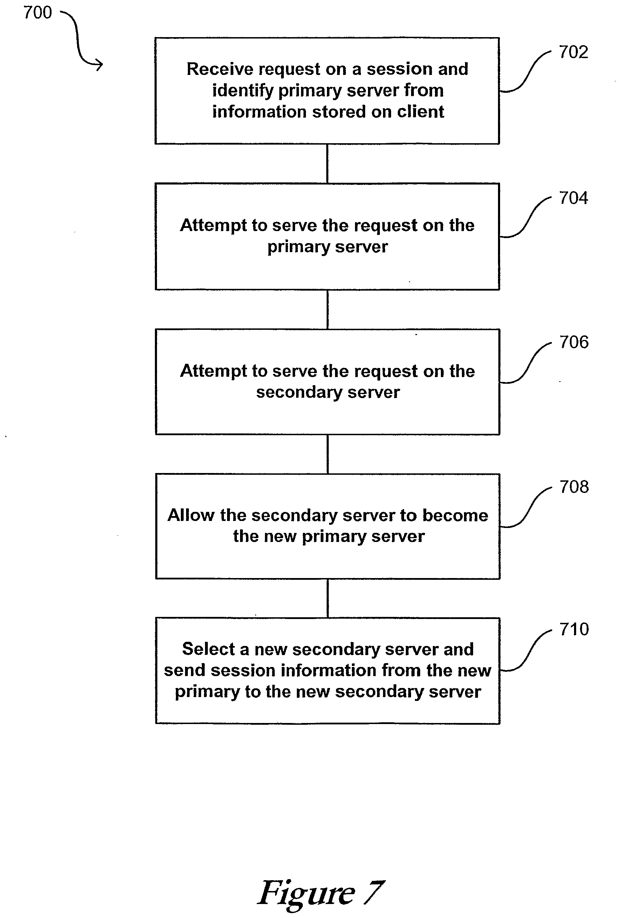

From this point, the process branches off into a path that can be useful for software load balancing, and a process that can be useful for hardware balancing. **Figure 7** shows a process **700** useful for software load balancing. In the process **700,** a request is received on a session for which a primary and secondary server have already been selected, and the identification of the primary is garnered from the information stored on the client **702.** An attempt is then made to serve the request on the primary server **704.** If the primary is unable to serve the request, the request is served on the secondary server **706.** Once the secondary server receives the request, the secondary server becomes the new primary server **708.** A new secondary server is then selected and sent the session information from the new primary server **710.**

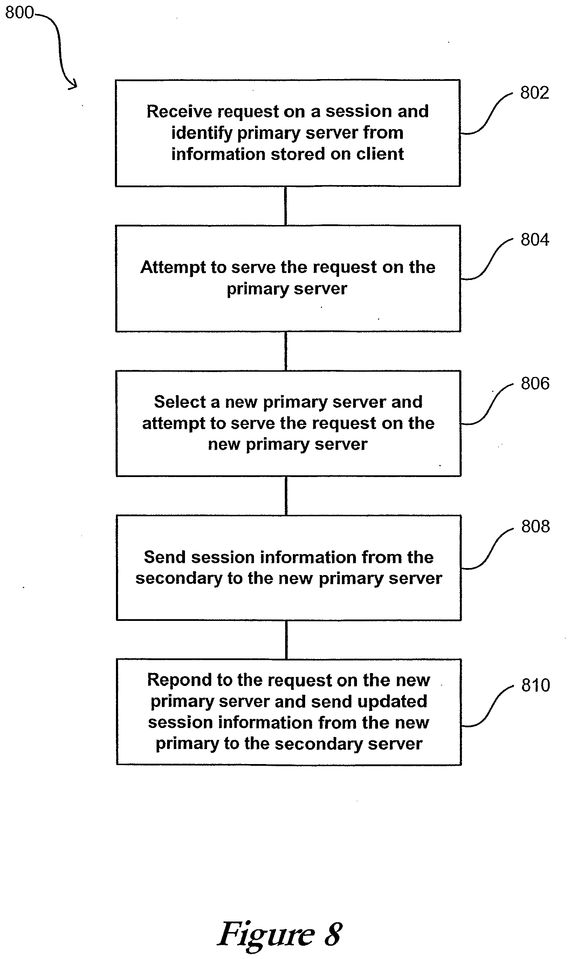

Another path, useful for systems with hardware load balancers, is shown in **Figure 8****.** In the process **800** of **Figure 8****,** a request is received on a session for which a primary and secondary server have already been selected, and the identification of the primary server is garnered from the information stored on the client **802.** An attempt is then made to serve the request on the primary server **804.** If the primary server is unable to serve the request, the hardware load balancer selects a new primary server and attempts to server the request on the new primary server **806.** The session information is then sent from the secondary server to the new primary server **808,** such as in response to a request from the new primary. The new primary server may then respond to the request, and send updated session information to the secondary server **810.**

To maintain the consistency in any embodiment of the present invention, a change in session data can be associated with a version number. The primary and secondary servers may each know which version of the session it is storing. A server can be instructed to modify the data only if it receives a request that has a version number later, or higher, than the one it is currently storing. The primary and secondary servers can periodically check each other to ensure that they are both on the same version number. The version number can use a method as simple as incrementing a number to guarantee ordering. For session information to remain consistent, it may be desirable for the primary and secondary servers to be in synchronization. When a version number is out of synchronization, the primary server can choose to send the entire session information to the secondary server to bring the session back into synchronization. The synchronization also facilitates the ability of the servers to switch roles between primary and secondary if the need arises.

If the primary server is unable to update information on the secondary server, for reasons such as a bad connection, it may be possible that the primary server will keep updating and the secondary server will be unaware of any updates. It may then be possible for the primary server to be several versions ahead of the secondary server. Once the primary server is again able to send information to the secondary server, a delta between two successive versions may not work. In such a case, the primary server can send an entirely new set of session data to the secondary server in order to make the data session consistent across both servers. In this case, the secondary server either gets a delta between successive versions, or it gets all the data for the entire session. In other embodiments, it may be possible to generate a delta between arbitrary versions in order to bring the secondary server up to the current version.

In simulating cookies for tracking Java states, large random numbers can be used for server identification. The numbers can be large enough that it is highly unlikely that the sum of two different pairs of identification numbers will be the same. It may be possible to only send these two numbers back to the Java client, and the server pair can be identified by adding the two numbers together to get a new number. This allows the passing of only one number to identify two servers, which can improve efficiency. Since the Java client can have a persistent connection with a specific server, the client can identify the second server by subtracting the identification number of the primary server from the summed number being passed, in order to arrive at the identification number of the second server.

Java objects such as session beans may, however, be stateless or have a transient state, as opposed to the persistent state discussed above. If a Java session bean is stateless, the bean may not be able to maintain session information between invokes, or successive requests. If the session information is stored elsewhere, the stateless beans can load the session information temporarily in order to serve the request. Failover, or turning session control over to a new primary server having replicated session information, can only occur where there was a clean invoke failure, such as where the primary server never received the request, the request was transactional and was aborted, or was a one-time-only request. If the session bean is transient, on the other hand, instances can be created by a stateless factory with stateless load balancing and failover. The bean in a transient state may either not be backed up or may be backed up in-memory using primary/secondary replication as discussed above.

Batch updates can be used to improve the throughput of the system with an increased failure window. When batching, or "boxcarring," several requests are sent together as one large request in order to improve efficiency and scalability. The batching of requests can be based upon any of a number of criteria, such as time intervals or numbers of requests. For instance, a system can send a batch of requests every 10 seconds or for every 100 individual session update messages. The system can also accommodate both criteria, sending a batch when either 10 seconds has passed since the last batch or when 100 requests are received, whichever comes first. Batching may cause the system to no longer be as reliable as synchronous updates, but can improve the overall system scalability.

The criteria may also be configurable, such as by a user or an administrator. Configurable criteria can be appropriate in situations where a system encounters a lot of traffic at certain times, but little to no traffic at othertimes. Configurable criteria can, for example, allow batching of every 100 messages at peak time, but no batching at all during off time, so that every request is sent in a reasonable amount of time.

A system administrator can also choose to pair two servers in a cluster as primary and secondary servers. The input of the administrator can be desirable in order to improve the overall fault tolerance of the system. For example, multiple servers can be located on one physical machine and an algorithm might choose to place both primary and secondary servers on the same machine. The session information could then be lost entirely if that machine fails. In order to prevent the loss of session information from machine failures, an administrator can choose to specify a primary server and a secondary server each on a separate physical machine. The administrator can also choose a primary server based on various load-balancing schemes. Examples of possible schemes are based on server load, connection number, and physical proximity.

The foregoing description of preferred embodiments of the present invention has been provided for the purposes of illustration and description. It is not intended to be exhaustive or to limit the invention to the precise forms disclosed. Obviously, many modifications and variations will be apparent to the practitioner skilled in the art. The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalence.

## Claims

1. A system for replicating information in a client session, the system including a primary server (306), a secondary server (308) and a web server (304), wherein:
the primary server (306) is selected from a cluster of three or more servers, and is adapted to:
receive a request in a client session and serve a response to the request;
store session information for the client session on the primary server;
select a secondary server from the cluster of servers;
send the session information relating to the client session to the selected secondary server for storage on the secondary server; and
update the session information stored on the selected secondary server in response to subsequent requests received by the primary server for the client session;
the selected secondary server (308) is adapted to:
store the session information (310) on the secondary server for the client session; and
receive a request in the client session, if the primary server is unable to process the request, and serve a response to the request; and
the web server (304) is adapted to receive a request from a client (302), the request containing identification information for said primary and secondary servers, the web server adapted to process the identification information and serve the process request on said primary server, the web server further adapted to serve the request on said secondary server if said primary server is unable to process the request.

2. A system according to claim 1, further comprising a database (112) in communication with said primary and secondary servers, said database storing information for use in processing the request.

3. A system according to claim 1, wherein said web server is further adapted to choose said primary server from the cluster of servers when an initial request is received for the client session and no identification information exists on the client.

4. A system according to claim 1, further comprising a cookie adapted to be stored on the client, said cookie adapted to contain the identification information for said primary and secondary servers.

5. A system according to claim 4, wherein said primary server is further adapted to generate said cookie on the client.

6. A system according to claim 1, wherein said web server further comprises a plug-in containing an algorithm for use in choosing said primary server.

7. A system according to claim 6, wherein said algorithm is a load-balancing algorithm.

8. A system according to claim 1, wherein said web server further comprises a plug-in containing an algorithm to be used in directing the request to said primary and secondary servers.

9. A system according to claim 1, wherein said primary server is adapted to select said secondary server.

10. A system according to claim 1, wherein said primary server is adapted to start the client session when receiving an initial request from the client.

11. A system according to claim 1, wherein said secondary server is further adapted to become the new primary server if the secondary server receives a request that could not be processed by said primary server.

12. A system according to claim 11, wherein said secondary server is further adapted to select a new secondary server and send the session information to the new secondary server.

13. A system according to claim 11, wherein said web server chooses a new secondary server.

14. A system according to claim 1, wherein said secondary server is further adapted to monitor said primary server to determine if said primary server may receive requests.

15. A system according to claim 1, wherein said secondary server is further adapted become a new primary server if said primary server is unable to receive requests.

16. A system according to claim 1, wherein one of said primary and secondary servers is selected from the group consisting of web servers, servlet engines, enterprise Java bean engines.

17. A system according to claim 1, wherein the primary server is adapted to receive a request from a Java client in a client session, and said system further comprises:
a stateful session bean on the primary server used to store information for the client session and pass the identity of said primary and secondary servers back to the client.

18. A system according to claim 17, further comprising a load balancer adapted to receive a request from a client and select said primary server.

19. A system according to claim 17, wherein said primary server is adapted to maintain a persistent connection with the Java client during the client session.

20. A system according to claim 1, wherein said web server is further adapted to send requests to said primary server in batches.

21. A system according to claim 1, wherein:
said primary server is adapted to generate a cookie containing information relating to said primary server and transmit the cookie to the session client.

22. A system according to claim 21, wherein:
the web server contains load-balancing logic for selecting said primary server, said web server being adapted to receive an initial request from a client and direct that request to said primary server, said web server further adapted to receive a subsequent request from a client, the subsequent request containing identification information for said primary and secondary servers, the web server adapted to process the identification information and serve the process request on said primary server, the web server further adapted to serve the request on said secondary server if said primary server is unable to process the request.

23. A method for replicating information in a client session, the method comprising:
making a load balancing decision for an initial request from a client in a client session in order to select a primary server from a cluster of three or more session servers;
the primary server (306):
receiving a request in a client session and serving a response to that request;
storing session information for the client session on the primary server;
selecting a secondary server from the cluster of servers;
sending the session information relating to the client session to the selected secondary server for storage on the secondary server; and
updating the session information stored on the selected secondary server in response to subsequent requests received by the primary server for the client session;
the selected secondary server (308) storing the session information (310) on the secondary server for the client session; and receiving a request in the client session, if the primary server is unable to process the request, and serving a response to the request; and
a web server receiving a request from a client (302), the request containing identification information for said primary and secondary servers, the web server processing the identification information and serving the process request on said primary server, the web server further serving the request on said secondary server if said primary server is unable to process the request.

24. A method according to claim 23, further comprising:
storing the information in a cookie on the client.

25. A method according to claim 23, further comprising:
storing session information in a stateful session bean.

26. A method according to claim 23, further comprising:
associating a version number with each update to the session information in response to a request.

27. A method according to claim 23, wherein sending session information for that client session from the primary server to the secondary server comprises sending a delta of information containing the changes in the session information.

28. A method according to claim 23, further comprising:
assigning the primary and secondary servers each an identification number.

29. A method according to claim 23, wherein the session information for the client session is sent from the primary server to a secondary server selected by said primary server, said method further comprising:
storing a cookie on the session client containing information identifying the primary and secondary servers.

30. A method according to claim 29, further comprising the step of reading identification information in a request received in the client session and serving the request on the primary server.

31. A method according to claim 23, further comprising:
storing a cookie on the session client, the cookie containing information identifying the primary and secondary servers; and
reading the identification information received with any subsequent request in the client session and serving that subsequent request on the primary server.

## Patentansprüche

1. System zum Reproduzieren von Informationen in einer Client-Sitzung, wobei das System einen primären Server (306), einen sekundären Server (308) und einen Web-Server (304) enthält, wobei:
der primäre Server (306) aus einem Cluster von drei oder mehr Servern ausgewählt ist und ausgelegt ist:
eine Anforderung in einer Client-Sitzung zu empfangen und eine Antwort auf die Anforderung zu liefern;
Sitzungsinformationen für die Client-Sitzung auf dem primären Server zu speichern;
einen sekundären Server aus dem Cluster von Servern auszuwählen;
die Sitzungsinformationen bezüglich der Client-Sitzung an den ausgewählten sekundären Server zum Speichern auf dem sekundären Server zu senden; und
die auf dem ausgewählten sekundären Server gespeicherten Sitzungsinformationen als Reaktion auf folgende durch den primären Server für die Client-Sitzung empfangene Anforderungen zu aktualisieren;
wobei der ausgewählte sekundäre Server (308) ausgelegt ist,
die Sitzungsinformationen (310) auf dem sekundären Server für die Client-Sitzung zu speichern; und
eine Anforderung in der Client-Sitzung zu empfangen, wenn der primäre Server die Anforderung nicht verarbeiten kann, und eine Antwort auf die Anforderung zu liefern; und
der Web-Server (304) ausgelegt ist, eine Anforderung von einem Client (302) zu empfangen, wobei die Anforderung Identifikationsinformationen für den primären und den sekundären Server enthält, wobei der Web-Server ausgelegt ist, die Identifikationsinformationen zu verarbeiten und die Prozessanforderung auf dem primären Server zu bedienen, wobei der Web-Server ferner ausgelegt ist, die Anforderung auf dem sekundären Server zu bedienen, wenn der primäre Server die Anforderung nicht verarbeiten kann.

2. System nach Anspruch 1, das ferner eine Datenbank (112) in Kommunikation mit dem primären und dem sekundären Server umfasst, wobei die Datenbank Informationen für die Verwendung bei der Verarbeitung der Anforderung speichert.

3. System nach Anspruch 1, wobei der Web-Server ferner ausgelegt ist, den primären Server aus dem Cluster von Servern auszuwählen, wenn eine Anfangsanforderung für die Client-Sitzung empfangen wird und keine Identifikationsinformationen auf dem Client existieren.

4. System nach Anspruch 1, das ferner ein Cookie umfasst, das ausgelegt ist, auf dem Client gespeichert zu sein, wobei das Cookie ausgelegt ist, die Identifikationsinformationen für den primären und den sekundären Server zu enthalten.

5. System nach Anspruch 4, wobei der primäre Server ferner ausgelegt ist, das Cookie auf dem Client zu erzeugen.

6. System nach Anspruch 1, wobei der Web-Server ferner ein Plug-in umfasst, das einen Algorithmus für die Verwendung beim Wählen des primären Servers enthält.

7. System nach Anspruch 6, wobei der Algorithmus ein Lastausgleichsalgorithmus ist.

8. System nach Anspruch 1, wobei der Web-Server ferner ein Plug-in umfasst, das einen Algorithmus enthält, der beim Lenken der Anforderung zu dem primären und dem sekundären Server zu verwenden ist.

9. System nach Anspruch 1, wobei der primäre Server ausgelegt ist, den sekundären Server auszuwählen.

10. System nach Anspruch 1, wobei der primäre Server ausgelegt ist, die Client-Sitzung zu starten, wenn eine Anfangsanforderung von dem Client empfangen wird.

11. System nach Anspruch 1, wobei der sekundäre Server ferner ausgelegt ist, der neue primäre Server zu werden, wenn der sekundäre Server eine Anforderung empfängt, die durch den primären Server nicht verarbeitet werden kann.

12. System nach Anspruch 11, wobei der sekundäre Server ferner ausgelegt ist, einen neuen sekundären Server auszuwählen und die Sitzungsinformationen an den neuen sekundären Server zu senden.

13. System nach Anspruch 11, wobei der Web-Server einen neuen sekundären Server wählt.

14. System nach Anspruch 1, wobei der sekundäre Server ferner ausgelegt ist, den primären Server zu überwachen, um zu bestimmen, ob der primäre Server Anforderungen empfangen kann.

15. System nach Anspruch 1, wobei der sekundäre Server ferner ausgelegt ist, ein neuer primärer Server zu werden, wenn der primäre Server Anforderungen nicht empfangen kann.

16. System nach Anspruch 1, wobei einer des primären und des sekundären Servers aus der Gruppe ausgewählt ist, die aus Web-Servern, Servlet-Maschinen und Unternehmens-JavaBean-Maschinen besteht.

17. System nach Anspruch 1, wobei der primäre Server ausgelegt ist, eine Anforderung von einem Java-Client in einer Client-Sitzung zu empfangen, und das System ferner Folgendes umfasst:
einen zustandsbezogenen Sitzungs-Bean auf dem primären Server, der verwendet wird, um Informationen für die Client-Sitzung zu speichern und die Identität des primären und des sekundären Server an den Client zurückzureichen.

18. System nach Anspruch 17, das ferner eine Lastausgleichseinrichtung umfasst, die ausgelegt ist, eine Anforderung von einem Client zu empfangen und den primären Server auszuwählen.

19. System nach Anspruch 17, wobei der primäre Server ausgelegt ist, eine dauerhafte Verbindung mit dem Java-Client während der Client-Sitzung aufrechtzuerhalten.

20. System nach Anspruch 1, wobei der Web-Server ferner ausgelegt ist, die Anforderungen an den primären Server in Bündeln zu senden.

21. System nach Anspruch 1, wobei:
der primäre Server ausgelegt ist, ein Cookie zu erzeugen, das Informationen bezüglich des primären Servers enthält, und das Cookie an den Sitzungs-Client zu senden.

22. System nach Anspruch 21, wobei:
der Web-Server eine Lastausgleichslogik zum Auswählen des primären Servers enthält, wobei der Web-Server ausgelegt ist, eine Anfangsanforderung von einem Client zu empfangen und die Anforderung zu dem primären Server zu lenken, wobei der Web-Server ferner ausgelegt ist, eine folgende Anforderung von einem Client zu empfangen, wobei die folgende Anforderung Identifikationsinformationen für den primären und den sekundären Server enthält, wobei der Web-Server ausgelegt ist, die Identifikationsinformationen zu verarbeiten und die Prozessanforderung auf dem primären Sever zu bedienen, wobei der Web-Server ferner ausgelegt ist, die Anforderung auf dem sekundären Server zu bedienen, wenn der primäre Server die Anforderung nicht bedienen kann.

23. Verfahren zum Reproduzieren von Informationen in einer Client-Sitzung, wobei das Verfahren Folgendes umfasst:
Ausführen einer Lastausgleichsentscheidung für eine Anfangsanforderung von einem Client in einer Client-Sitzung, um einen primären Server aus einem Cluster von drei oder mehr Sitzungs-Servern auszuwählen;
dass der primäre Server (306):
eine Anforderung in einer Client-Sitzung empfängt und eine Antwort auf die Anforderung liefert;
Sitzungsinformationen für die Client-Sitzung auf dem primären Server speichert;
einen sekundären Server aus dem Cluster von Servern auswählt;
die Sitzungsinformationen bezüglich der Client-Sitzung an den ausgewählten sekundären Server zum Speichern auf dem sekundären Server sendet; und
die auf dem ausgewählten sekundären Server gespeicherten Sitzungsinformationen als Reaktion auf durch den primären Sever für die Client-Sitzung empfangene folgende Anforderungen aktualisiert;
dass der ausgewählte sekundäre Server (308) die Sitzungsinformationen (310) auf dem sekundären Server für die Client-Sitzung speichert; und eine Anforderung in der Client-Sitzung empfängt, wenn der primäre Server die Anforderung nicht verarbeiten kann, und eine Antwort auf die Anforderung liefert; und
dass ein Web-Server eine Anforderung von einem Client (302) empfängt, wobei die Anforderung Identifikationsinformationen für den primären und den sekundären Server enthält, wobei der Web-Server die Identifikationsinformationen verarbeitet und die Prozessanforderung auf dem primären Server bedient, wobei der Web-Server ferner die Anforderung auf dem sekundären Server bedient, wenn der primäre Server die Anforderung nicht verarbeiten kann.

24. Verfahren nach Anspruch 23, das ferner Folgendes umfasst:
Speichern der Informationen in einem Cookie auf dem Client.

25. Verfahren nach Anspruch 23, das ferner Folgendes umfasst:
Speichern von Sitzungsinformationen in einem zustandsbezogenen Sitzungs-Bean.

26. Verfahren nach Anspruch 23, das ferner Folgendes umfasst:
Zuordnen einer Versionsnummer zu jeder Aktualisierung der Sitzungsinformationen als Reaktion auf eine Anforderung.

27. Verfahren nach Anspruch 23, wobei das Senden von Sitzungsinformationen für diese Client-Sitzung von dem primären Server an den sekundären Server umfasst, ein Delta von Informationen, die die Änderungen der Sitzungsinformationen enthalten, zu senden.

28. Verfahren nach Anspruch 23, das ferner Folgendes umfasst:
Zuweisen jeweils einer Identifikationsnummer zu dem primären und dem sekundären Server.

29. Verfahren nach Anspruch 23, wobei die Sitzungsinformationen für die Client-Sitzung von dem primären Server an einen sekundären Server gesendet werden, der durch den primären Server ausgewählt ist, wobei das Verfahren ferner Folgendes umfasst:
Speichern eines Cookies, das Informationen enthält, die den primären und den sekundären Server identifizieren, auf dem Sitzung-Client.

30. Verfahren nach Anspruch 29, das ferner den Schritt umfasst, Identifikationsinformationen in einer in der Client-Sitzung empfangenen Anforderung zu lesen und die Anforderung auf dem primären Server zu bedienen.

31. Verfahren nach Anspruch 23, das ferner Folgendes umfasst:
Speichern eines Cookies auf dem Sitzung-Client, wobei das Cookie Informationen enthält, die den primären und den sekundären Server identifizieren; und
Lesen der mit einer folgenden Anforderung in der Client-Sitzung empfangenen Identifikationsinformationen und Bedienen dieser folgenden Anforderung auf dem primären Server.

## Revendications

1. Système pour répliquer des informations dans une session client, le système comprenant un serveur primaire (306), un serveur secondaire (308) et un serveur web (304), où :
le serveur primaire (306) est sélectionné dans un groupe de trois serveurs ou plus, et est adapté pour :
recevoir une requête dans une session client et fournir une réponse à la requête ;
stocker des informations de session pour la session client sur le serveur primaire ;
sélectionner un serveur secondaire dans le groupe de serveurs ;
envoyer les informations de session relatives à la session client au serveur secondaire sélectionné pour un stockage sur le serveur secondaire ; et
mettre à jour les informations de session stockées sur le serveur secondaire sélectionné en réponse aux requêtes ultérieures reçues par le serveur primaire pour la session client ;
le serveur secondaire sélectionné (308) est adapté pour :
stocker les informations de session (310) sur le serveur secondaire pour la session client ; et
recevoir une requête dans la session client, si le serveur primaire n'est pas en mesure de traiter la requête, et fournir une réponse à la requête ; et
le serveur web (304) est adapté pour recevoir une requête d'un client (302), la requête contenant des informations d'identification pour lesdits serveurs primaire et secondaire, le serveur web étant adapté pour traiter les informations d'identification et fournir une réponse à la requête de processus sur ledit serveur primaire, le serveur web étant en outre adapté pour fournir une réponse à la requête sur ledit serveur secondaire si ledit serveur primaire n'est pas en mesure de traiter la requête.

2. Système selon la revendication 1, comprenant en outre une base de données (112) en communication avec lesdits serveurs primaire et secondaire, ladite base de données stockant des informations à utiliser pour traiter la requête.

3. Système selon la revendication 1, dans lequel ledit serveur web est en outre adapté pour choisir ledit serveur primaire à partir du groupe de serveurs lorsqu'une requête initiale est reçue pour la session client et qu'il n'existe aucune information d'identification sur le client.

4. Système selon la revendication 1, comprenant en outre un cookie adapté pour être stocké sur le client, ledit cookie étant adapté pour contenir les informations d'identification pour lesdits serveurs primaire et secondaire.

5. Système selon la revendication 4, dans lequel ledit serveur primaire est en outre adapté pour générer ledit cookie sur le client.

6. Système selon la revendication 1, dans lequel ledit serveur web comprend en outre un module d'extension contenant un algorithme à utiliser pour choisir ledit serveur primaire.

7. Système selon la revendication 6, dans lequel ledit algorithme est un algorithme d'équilibrage de charge.

8. Système selon la revendication 1, dans lequel ledit serveur web comprend en outre un module d'extension contenant un algorithme à utiliser pour diriger la requête vers lesdits serveurs primaire et secondaire.

9. Système selon la revendication 1, dans lequel ledit serveur primaire est adapté pour sélectionner ledit serveur secondaire.

10. Système selon la revendication 1, dans lequel ledit serveur primaire est adapté pour démarrer la session client lors de la réception d'une requête initiale du client.

11. Système selon la revendication 1, dans lequel ledit serveur secondaire est en outre adapté pour devenir le nouveau serveur primaire si le serveur secondaire reçoit une requête qui ne pourrait pas être traitée par ledit serveur primaire.

12. Système selon la revendication 11, dans lequel ledit serveur secondaire est en outre adapté pour sélectionner un nouveau serveur secondaire et envoyer les informations de session au nouveau serveur secondaire.

13. Système selon la revendication 11, dans lequel ledit serveur web choisit un nouveau serveur secondaire.

14. Système selon la revendication 1, dans lequel ledit serveur secondaire est en outre adapté pour surveiller ledit serveur primaire afin de déterminer si ledit serveur primaire peut recevoir des requêtes.

15. Système selon la revendication 1, dans lequel ledit serveur secondaire est en outre adapté pour devenir un nouveau serveur primaire si ledit serveur primaire n'est pas en mesure de recevoir des requêtes.

16. Système selon la revendication 1, dans lequel l'un desdits serveurs primaire et secondaire est sélectionné dans le groupe constitué de serveurs web, de moteurs de servlet, de moteurs Enterprise Java Beans.

17. Système selon la revendication 1, dans lequel le serveur primaire est adapté pour recevoir une requête d'un client Java dans une session client, et ledit système comprend en outre :
un Stateful Session Bean sur le serveur primaire utilisé pour stocker des informations pour la session client et retourner l'identité desdits serveurs primaire et secondaire au client.

18. Système selon la revendication 17, comprenant en outre un équilibreur de charge adapté pour recevoir une requête d'un client et sélectionner ledit serveur primaire.

19. Système selon la revendication 17, dans lequel ledit serveur primaire est adapté pour maintenir une connexion persistante avec le client Java au cours de la session client.

20. Système selon la revendication 1, dans lequel ledit serveur web est en outre adapté pour envoyer des requêtes audit serveur primaire par lots.

21. Système selon la revendication 1, dans lequel :
ledit serveur primaire est adapté pour générer un cookie contenant des informations relatives audit serveur primaire et transmettre le cookie au client de session.

22. Système selon la revendication 21, dans lequel :
le serveur web contient la logique d'équilibrage de charge pour sélectionner ledit serveur primaire, ledit serveur web étant adapté pour recevoir une requête initiale d'un client et diriger cette requête vers ledit serveur primaire, ledit serveur web étant en outre adapté pour recevoir une requête subséquente d'un client, la requête subséquente contenant des informations d'identification pour lesdits serveurs primaire et secondaire, le serveur web étant adapté pour traiter les informations d'identification et fournir une réponse à la requête de processus sur ledit serveur primaire, le serveur web étant en outre adapté pour fournir la réponse à la requête sur ledit serveur secondaire si ledit serveur primaire n'est pas en mesure de traiter la requête.

23. Procédé pour répliquer des informations dans une session client, le procédé comprenant les étapes suivantes :
prendre une décision d'équilibrage de charge pour une requête initiale d'un client dans une session client afin de sélectionner un serveur primaire dans un groupe de trois serveurs de session ou plus ;
le serveur primaire (306) :
recevant une requête dans une session client et fournissant une réponse à cette requête ;
stockant des informations de session pour la session client sur le serveur primaire ;
sélectionnant un serveur secondaire dans le groupe de serveurs ;
envoyant les informations de session relatives à la session client au serveur secondaire sélectionné pour un stockage sur le serveur secondaire ; et
mettant à jour les informations de session stockées sur le serveur secondaire sélectionné en réponse aux requêtes ultérieures reçues par le serveur primaire pour la session client ;
le serveur secondaire sélectionné (308) stockant les informations de session (310) sur le serveur secondaire pour la session client ; et recevant une requête dans la session client, si le serveur primaire n'est pas en mesure de traiter la requête, et fournissant une réponse à la requête ; et
un serveur web recevant une requête d'un client (302), la requête contenant des informations d'identification pour lesdits serveurs primaire et secondaire, le serveur web traitant les informations d'identification et fournissant une réponse à la requête de processus sur ledit serveur primaire, le serveur web fournissant en outre une réponse à la requête sur ledit serveur secondaire si ledit serveur primaire n'est pas en mesure de traiter la requête.

24. Procédé selon la revendication 23, comprenant en outre l'étape suivante :
stocker les informations dans un cookie sur le client.

25. Procédé selon la revendication 23, comprenant en outre l'étape suivante :
stocker des informations de session dans un Stateful Session Bean.

26. Procédé selon la revendication 23, comprenant en outre l'étape suivante :
associer un numéro de version à chaque mise à jour des informations de session en réponse à une requête.

27. Procédé selon la revendication 23, dans lequel envoyer des informations de session pour cette session client depuis le serveur primaire vers le serveur secondaire comprend d'envoyer un delta d'informations contenant les changements des informations de session.

28. Procédé selon la revendication 23, comprenant en outre l'étape suivante :
attribuer un numéro d'identification à chacun des serveurs primaire et secondaire.

29. Procédé selon la revendication 23, dans lequel les informations de session pour la session client sont envoyées depuis le serveur primaire vers un serveur secondaire sélectionné par ledit serveur primaire, ledit procédé comprenant en outre l'étape suivante :
stocker un cookie sur le client de session contenant des informations permettant d'identifier les serveurs primaire et secondaire.

30. Procédé selon la revendication 29, comprenant en outre l'étape consistant à lire des informations d'identification dans une requête reçue dans la session client et à fournir une réponse à la requête sur le serveur primaire.

31. Procédé selon la revendication 23, comprenant en outre les étapes suivantes :
enregistrer un cookie sur le client de session, le cookie contenant des informations identifiant les serveurs primaire et secondaire ; et
lire les informations d'identification reçues avec toute requête subséquente dans la session client et fournir une réponse à cette requête subséquente sur le serveur primaire.
